# EUROPEAN PATENT SPECIFICATION

(11) **EP 1 948 717 B1**
(45) Date of publication and mention of the grant of the patent: **21.05.2014**
(21) Application number: 06807770.0
(22) Date of filing: 08.11.2006
(51) Int. Cl.: C08J 3/12, C08L 75/04

(54) **USE OF A DRY POWDER OF A POLYMERIC ADDITIVE**
VERWENDUNG EINES TROCKENEN PULVERS EINES POLYMEREN ADDITIVS
UTILISATION D'UNE POUDRE SECHE D'UN ADDITIF POLYMERE

(30) Priority: 17.11.2005 EP 05110851
(43) Date of publication of application: 30.07.2008
(73) Proprietor: BASF SE, 67056 Ludwigshafen (DE)
(72) Inventor: KOK, Harm-Jan, NL-8446 PB Heerenveen (NL)
(74) Representative: Maiwald Patentanwalts GmbH
(86) International application number: PCT/EP2006/068198
(87) International publication number: WO 2007/057326

(56) References cited:
- EP-A- 1 241 211
- EP-A1- 0 438 836
- WO-A-02/14396
- WO-A-95/21688
- GB-A- 1 175 339
- "Environmentally benign formation of polymeric microspheres by rapid expansion of supercritical carbon dioxide solution with a nonsolvent" ENVIRONMENTAL SCIENCE & TECHNOLOGY, vol. 35, no. 20, 2001, pages 4149-4155, XP002424113 USA

## Description

The present invention relates a process for the preparation of a dry powder of a polymeric additive from the solution or the melt using the PGSS process (Particles from Gas Saturated Solutions). The particles produced according to the invention are suitable as dispersing additives.

The Gas Saturated Solution **(PGSS)** process uses a supercritical fluid, usually CO₂ to crystallize a solution, and is described in EP A0744992B1 (Weidner et al).

The PGSS process can be used to create micro-sized particles with the ability to control particle size distribution. PGSS also allows the production of particles that are solvent-free. In the PGSS process, a compressible fluid is introduced under pressure in the polymer or polymer solution to dissolve it and the resultant solution is then expanded so that particles form during the expansion process.

The driving force of the PGSS is a sudden temperature drop of the solution below the melting point of the polymer. This occurs as the solution is expanded from a working pressure to atmospheric conditions due to the Joule-Thompson effect. The rapid cooling of the polymer solution causes the crystallization of the polymer. The cooling is sudden and homogeneous throughout the solution; therefore, homogenous nucleation is the method of particle formation. The powder/particles produced are collected in the expansion chamber.

US6056791 corresponding to EP744992 describes a process for the production of particles or powders by employing the PGSS process. Examples are given for glyceride mixtures. Polymeric additives are not mentioned.

US6548619 corresponding to EP1309643A1 (Weidner et al) describes a process for producing heat activatable polyurethane particles by expanding a mixture of carbon dioxide and heat-activatable polyurethane by means of an expansion device into a container. Heat activatable polyurethanes have blocked isocyanate groups wherein the isocyanate groups have been reacted with a blocking agent such as e.g. a phenol or a caprolactame.

The problem underlying the present invention is to find a drying technique to produce a dry free flowing powder of a polyurethane dispersant or of an acrylic block copolymer dispersant.

It has been found that using the PGSS technique solves this problem.

Thus, the invention relates to the use of a dried polymeric powder as a dispersing additive wherein the dried polymeric powder is obtained by a process comprising the steps of
(a) providing in a vessel a polyurethane dispersant dissolved in a solvent or an acrylic block copolymer dispersant dissolved in a solvent,
(b) adjusting the temperature of the dissolved dispersant of step a to a range between 40 °C to 200 °C,
(c) pressurizing carbon dioxide at a pressure between 50 and 1000 bar and heating the carbon dioxide to a temperature between 100 °C and 200 °C,
(d) mixing the heated dissolved dispersant of step b and the heated carbon dioxide to reach a gas to polymer ratio (GTP) of between 2 to 8,
(e) expanding the mixture obtained in d) by means of an expanding device into a spraying tower,
(f) removing from the stream of expanded carbon dioxide the dry polymeric particles which have been formed,
**characterized in that** the polyurethane dispersant is the reaction product of
A. one or more polyisocyanates having an average functionality of from 2.0 to 5, with
B. a mixture of
   B1. at least one monohydroxyl compounds selected from the group consisting of monohydroxyl compounds with an aliphatic hydrocarbon, monohydroxyl compounds with an aliphatic hydrocarbon substituted with aryl groups, monohydroxyl compounds with an aliphatic hydrocarbon substituted with halogen groups, monohydroxyl compounds with a cycloaliphatic hydrocarbon, monohydroxyl compounds with a cycloaliphatic hydrocarbon substituted with aryl groups, and monohydroxyl compounds with a cycloaliphatic hydrocarbon substituted with halogen groups, and
   B2. at least one monohydroxy-monocarboxylic acid compound, the monohydroxy-monocarboxylic acid compound obtained by esterification of hydrocarboxylic acids or by reaction of a diol with at least one dicarboxylic acid or anhydride compound, to form an intermediate, followed by reacting the intermediate with
C. a compound containing at least one basic ring nitrogen and a group which is capable of reacting with an isocyanate group; and
   the acrylic block copolymer dispersant is prepared from an acrylate or methacrylate and at least one cationic monomer.

The claimed polyurethane dispersants are described in EP 438836A1 (EFKA) or in the corresponding US-Patent 5,399,294 which is incorporated therein by reference.

C is preferably 1-(2-aminoethyl)-piperazine, 2-(1-pyrrolidyl)-ethylamine, 4-amino-2-methoxy-pyrimidine, 2-dimethylaminoethanol, 1-(2-hydroxyethyl)-piperazine, 4-(2-hydroxyethyl)-morpholine, 2-mercaptopyrimidine, or 2-mercaptobenzimidazole or 4-(2-aminoethyl)-pyridine, 2-amino-6-4-(2-aminoethyl)-pyridine, 2-amino-6-methoxybenzothiazole, 4-(aminoethyl)-pyridine, N,N-diallylmelamine, 3-amino-1,2,4-triazole, 1-(3-aminopropyl)-imidazole, 4-(2-hydroxyethyl)-pyridine, 1-(2-hydroxyethyl)-imidazole, or 3-mercapto-1,2,4-triazole.
C is specially preferred 3-amino-1,2,4-triazole.

Most preferred is 1-(3-aminopropyl)-imidazole.

Preferred commercial polyurethane dispersants are e.g. Ciba® EFKA® 4046, Ciba® EFKA® 4047, Ciba® EFKA® 4050, Ciba® EFKA® 4055, Ciba® EFKA® 4060, Ciba® EFKA® 4520, and Ciba® EFKA® 4080.

The block copolymer is prepared from an acrylate or methacrylate and at least one cationic monomer.

Suitable acrylic monomers are e.g. methyl acrylate, ethyl acrylate, propyl acrylate, isopropyl acrylate, butyl acrylate, pentyl acrylate, hexyl acrylate, 2-ethylhexyl acrylate, nonyl acrylate, lauryl acrylate, methyl methacrylate, ethyl methacrylate, propyl methacrylate, isopropyl methacrylate, butyl methacrylate, pentyl methacrylate, hexyl methacrylate, 2-ethylhexyl methacrylate, nonyl methacrylate, lauryl methacrylate, and the like, and any mixtures thereof.

Suitable cationic monomers include diallyl diC1-C12alkyl monomers such as diallyl dimethyl ammonium chloride, but preferably the cationic monomer is a diC1-C12alkylamino-alkyl(meth)acrylate or -acrylamide and/or a N-substituted acrylamide.

Although the polymer can be in free base form, especially when it is a cationic acrylamide or methacrylamide, it is preferably in the form of an acid addition or quaternary ammonium salt, such as (meth)acrylamido propyltrimethyl ammonium chloride.

N-substituted acrylamide is selected from the group consisting of N-methyl acrylamide, N-ethyl acrylamide, N-propyl acrylamide, N,N-dimethyl acrylamide, N,N-diethyl acrylamide, N,N-dipropyl acrylamide and diacetone acrylamide.

When the monomer is a cationic acrylamide or methacrylamide, the dialkylaminoalkyl group is generally a dialkylamino propyl or dialkylamino isopropyl group. When the monomer is a cationic acrylate or methacrylate, the dialkylaminoalkyl group is generally a dialkylaminoethyl group.

It is usually preferred for the cationic monomer to be a dialkylaminoalkyl(meth)acrylate acid salt or quaternary ammonium salt, most preferably dimethylaminoethyl methacrylate. Usually it is present as the methyl chloride quaternary ammonium salt.

Polyacrylate block copolymers are made through nitroxyl-controlled radical polymerization. (NOR technology)

The polyacrylate can also contain vinylic co-monomers other than (meth)acrylates.

The polymers mentioned here can be randomly structured, or contain blocks and/or grafted side chains. These blocked and grafted side chains may be polyester, polyether and polyacrylic moieties.

The highly compressible fluid is preferably carbon dioxide. However other fluids such as short-chain alkanes, dinitrogen monoxide, nitrogen alone or in mixtures may be employed.

The solvent used in step (a) may be a hydrocarbon such as xylene; ethers such as dioxane, alcohols such as pr., sec. or tert. butanol, esters such as butylacetate or methoxypropyl-acetate, and dimethylformamide. An alcohol and/or an ester are preferred.

The temperature of the polymeric additive in step b) is in the range of 40 °C to 200 °C, preferably between 40 °C and 120 °C, more preferably between 60 °C and 100 °C.

The pressure in step c) is preferably between 50 and 1000bar, preferably 70 and 500 bar and the temperature in the range of 40 °C to 200 °C, preferably between 125 °C and 175 °C,

The CO₂ temperature should be between 100 °C and 200 °C. Preferably between 125 °C and 175 °C.

The gas to polymer ratio should be between 2 and 8. Preferably between 4 and 6.

The Temperature in the spraying tower should be between 50 °C and 120 °C. Preferably between 60 °C and 100 °C.

The Nozzle diameter in the spraytower is between 0.5mm and 5 mm.

As a typical example the process is described in detail using a polyurethane dispersant comprising a polyurethane backbone with pendant dispersing groups.
Examples for dispersing groups are carboxylate, phosphate, phosphonate, sulfonate, tertiary amine, quaternary ammonium groups, etc.

In another example the process is described using an acrylic block copolymer dispersant.

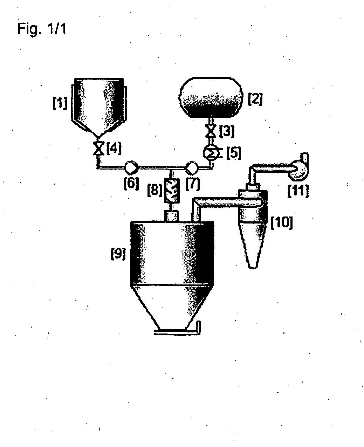

Fig. 1 shows a PGSS device and serves to explain the process according to the invention in more detail.

The polyurethane or the acrylic block copolymer is dissolved in a solvent and is preheated in a supply Vessel [1] to a temperature which is 40°C to 120°C, preferably between 60°C to 100°C.
The percentage by weight of the polyurethane or of the acrylic block copolymer in the solvent may be 30 to 99%.

The compressible fluid is stored in Vessel [2], compressed by Compressor [3], heated by heat exchanger [5] to a temperature between 100 °C and 200 °C and supplied via pump [7] to a mixer [8].

The polyurethane or the acrylic block copolymer is compressed separately by compressor [4].
A pump [6] conveys the preheated polyurethane solution or the acrylic block copolymer solution to a mixer [8].
The polyurethane solution or the acrylic block copolymer solution as well as the compressible fluid are mixed intensively by means of a static mixer. The gas to polymer solution ratio (GTP) is between 2 to 8, preferably 4 to 6. The pressure in the mixing device is the same as the pressure of the compressed fluid. Here some of the compressed gas dissolves in the polyurethane solution or in the acrylic block copolymer solution.

After mixing, the polyurethane solution or the acrylic block copolymer is expanded suddenly by an expansion device (not to be seen in Fig. 1) in a spray tower [9].

On expansion of the solution containing the highly liquified gas, the latter is converted back into the gaseous state. This results in cooling of the mixture of highly compressible fluid and polyurethane solution or the acrylic block copolymer solution and in precipitation of the polyurethane or the acrylic block copolymer as solid.
The spray tower [9] has dimensions such that preferentially larger particles with an equivalent diameter >10 µm are deposited by sedimentation. The particles are collected in a discharge vessel or can be continuously discharged using a suitable apparatus (airlock, screw, fluidized bed with overflow inter.alia). The residual solvent content of the dried (powder) polyurethane dispersant or of the dried acrylic block copolymer dispersant is very low, and typically < 2 wt%.

The dried dispersant is preferably used as dispersant in powder form. There is no need to dissolve the dispersant before use in a liquid coating or ink formulation.

The gas stream from which the larger particles have been removed leaves the spray tower [9] at the upper end and is fed to a cyclone [10]. The cyclone has dimensions such that preferentially small particles with a size above 1 µm are deposited. The particles are collected in a discharge vessel fixed on the lower end of the cyclone.

The residual gas is passed out of the system through a volume flow gauge [11] and can be recompressed and returned to the vessel [2]. The gas can also, where appropriate, be continuously extracted from the system by means of a blower.

### Accessibility of the starting materials:

The starting materials are easy accessible because they are commercially available products e.g. of Ciba Specialty Chemicals, trade name Ciba® EFKA®.

Preparation of the polyurethane dispersants as disclosed in EP 438836A1.

### Example of preparation A

31.92 g caprolactone, 10.40 g HD=Ocenol 45/50 (Henkel & Cie., Dusseldorf) are dispersed under an inert gas. 0.0012 g dibutyltin dilaurate are added and heated to 170.degree. C. with stirring until a solid of 99% is obtained (about 8 hours). The product is solid at room temperature and slightly yellowish in colour.

### Example of preparation B

60.0 g polyethylene glycol having the average molecular mass of 1000 are molten under an inert gas. 17.10 g tetrachlorophthalic anhydride are added with stirring and heated to 150.degree. C. The reaction is completely terminated as soon as an acid number of 43.6 is obtained; duration about 4 hours. The product is waxy at room temperature and is whitish-yellowish in colour.

### Example of preparation C

75.00 g polyethylene glycol having the average molecular mass of 1000 are molten with introduction of nitrogen. When the diol becomes liquid, 11.10 g phthalic anhydride are added and heated to 150.degree. C. with stirring. The reaction is completely terminated when an acid number of 48.87 is obtained. The product is waxy at room temperature. It is also possible to use maleic anhydride instead of phthalic anhydride.

### Example of preparation D

394 g pentahydro-perfluorononanediol are molten. 266.30 g dodecenyl succinic anhydride are added under an inert gas and with stirring and heated to 150.degree. C. The reaction is completely terminated as soon as an acid number of 96 mg KOH/g is obtained. The resinous product is yellow in colour; it is used in 70% form as a solution in methoxypropyl acetate.

### Example 1 as disclosed in EP 438836A1

41.06 g of a caprolactone polyester (Example A) and 63.00 g Desmodur IL (51 % in butyl acetate) are dissolved in 42.48 g butyl acetate and 40.99 g methoxypropyl acetate with introduction of an inert gas and stirring. Then 1205 g monohydroxycarboxylic acid (Example of preparation C) are added and the formulation is heated to 70.degree. C. After a reaction time of 2 hours the addition has occurred, which is recognisable at the NCO content. 32.44 g of a 20% solution of 2-amino-4-methylpyridine in MNP are added and further stirring takes place for 1 hour. At the end, an excess of n-butanol is added to react NCO groups that are not reacted. The viscous end product is yellowish in colour and has a solid content of 39.54%.
In a parallel mode of experimental procedure the equivalent proportion of polyethylene glycol 1000 (10.50 g) was used instead of the monohydroxycarboxylic acid. Here addition of the 2-amino-4-methylpyridine solution already led to gelatinization after only 50% of the solution had been added.

### Example 2 as disclosed in EP 438836A1

23.27 g of a caprolactone polyester (Example of preparation A) and 42.00 g Desmodur IL (51% in butyl acetate) are dissolved in 30.62 g butyl acetate and 36.02 g methoxypropyl acetate with introduction of nitrogen and stirring. Then 7.68 g monohydroxycarboxylic acid (Example B) are added and the formulation is heated to 70.degree. C. After the addition (about 2 hrs) has ocurred, 15.11 g of a 16.67% NMP solution of 3-amino-1,2,4-triazole are added and further stirring takes place for one hour. At the end, an excess of n-butanol is added to react NCO groups that are not reacted. The product has medium viscosity and is light yellow in colour.
In a parallel formulation 7.00 g polyethylene glycol 1000 were used instead of the 7.68 g monohydroxycarboxylic acid. Here addition of the 3-amino-1,2,4,-triazole solution led to complete gelatinization of the mass, so that it was unsuitable for use.

### Example 3 as disclosed in EP 438836A1

4.42 g of a caprolactone polyester (Example A) and 8.40 g Desmodur IL (51 % in butyl acetate) are dissolved in 6.12 g butyl acetate and 7.20 g methoxypropyl acetate with introduction of nitrogen and stirring. Then 1.71 g monohydroxycarboxylic acid (Example B) are added and the formulation is heated to 70.degree. C. After a reaction time of 2 hours the addition has occurred, which is recognisable at the NCO content. A mixture of 0.75 g 1-(3-aminopropyl)-imidazole dissolved in 2.95 g of N-methylpyrrolidone is added and further stirring takes place for one hour. At the end, an excess of n-butanol is added to react NCO groups that are not reacted. The product is light yellow in colour and viscous.
In a parallel formulation 1.40 g of polyethylene glycol 1000 were added instead of the 1.71 g of monohydroxycarboxylic acid. In this formulation, addition of the 1-(3-aminopropyl)-imidazole NMP solution led to gelatinization, so that the product was unsuitable for use.

### Example 4 as disclosed in EP 438836A1

In a synthesis apparatus 25.39 g caprolactone polyester (Example A) and 42.00 g Desmodur IL (51% in butyl acetate) are dissolved in 38.31 g butyl acetate and 33.32 g methoxypropyl acetate with introduction of nitrogen and stirring. Then 6.58 g monohydroxycarboxylic acid (Example B) and 1.89 g monohydroxycarboxylic acid solution (Example D) are added and the formulation is heated to 70.degree. C. After a reaction time of 2 hours the addition has occurred, which is recognisable at the NCO content. 14.10 g butyl acetate and 14.10 g methoxypropyl acetate are added, to which 21.94 g of a 22.79% solution of 1-(3-amino-propyl)-imidazole in NMP are added, and further stirring takes place for one hour. At the end, an excess of n-butanol is added to react NCO groups that are not reacted. The viscous end product is straw yellow in colour.

### Experimental part

### Example 1

In a closed vessel the polymer solution (Ciba® EFKA® 4046, a polymer according to Ex. 4 of EP438836) was heated to 80 °C. The CO₂ in the gas cylinder was pressurized with a compressor to 170 bar and heated via a heat exchanger to 180 °C. The heated polymer solution and the heated supercritical CO₂ were pumped in the static mixer with a gas to polymer solution (GTP) ratio of 1:7,5 and were thoroughly mixed in the static mixer. The gas saturated polymer solution (polymer melt) was expanded in the heated (74 °C) spraying tower. The polymer melt was transformed in very small particles and due to the Joule-Thomson-Effect of the carbon dioxide (CO₂), the polymer was cooled below its solidifying point. The CO₂ gas and the solvent were removed via the top of the spraying tower. The final solid product was collected via the bottom of the spraying tower. The result was a very white solid material with an average particle size of 25 µm and a residual solvent content of 1.41%. Further examples are listed in below table, using the same procedure as described above with the indicated process parameters:

| Nr | T_{CO2} | Tₚₑ | Pₚₑ | GTP | ND | Tₐₑ | P-SC[2h] DIN EN 827 | Vacuum [2h] 60 °C; 50 Pa |
|---|---|---|---|---|---|---|---|---|
| 2 | 280 °C | 260 °C | 70 bar | 6.0 | 1.3 mm | 107 °C | 0.73% ± 0.071 | 0.54% ± 0.059 |
| 3 | 240 °C | 212 °C | 98 bar | 7.4 | 1.3 mm | 108 °C | 0.59% ± 0.027 | 0.52% ± 0.014 |
| 4 | 250 °C | 222 °C | 118 bar | 9.0 | 1.3 mm | 115 °C | 0.56% ± 0.047 | 0.34 % ± 0.019 |
| 5 | 190 °C | 170 °c | 122 bar | 9.2 | 0.7 mm | 90 °C | 1.24% ± 0.056 | 0.48% ± 0.017 |
| 1* | 180 °C | 175 °C | 170 bar | 7.5 | 0.7 mm | 74 °C | 1.41% ± 0.028 | 1.12% ± 0.116 |

| | | | | | | | | |
|---|---|---|---|---|---|---|---|---|
| * = this example is written in detail. | | | | | | | | |

### Explanation abbreviations

- T_{CO2}:: Temperature of the supercritical CO₂
- Tₚₑ:: Temperature of the gas saturated polymer solution
- Pₚₑ:: Pressure of the gas saturated polymer solution
- GTP:: Gas to polymer solution ratio
- ND:: Nozzle diameter
- Tₐₑ:: Temperature in the spraying tower.
- P-SC:: Polymer Solid Content

### Example 2

In a closed vessel the polymer solution (Ciba® Surcol® SP6) was heated to 80 °C. The CO₂ in the gas cylinder was pressurized with a compressor to 180 bar and heated via a heat exchanger to 195 °C. The heated polymer solution and the heated supercritical CO₂ were pumped in the static mixer with a gas to polymer solution (GTP) ratio of 1:11 and were thoroughly mixed in the static mixer. The gas saturated polymer solution (polymer melt) was expanded in the heated (65 °C) spraying tower. The polymer melt was transformed in very small particles and due to the Joule-Thomson-Effect of the carbon dioxide (CO₂), the polymer was cooled below its solidifying point. The CO₂ gas and the solvent were removed via the top of the spraying tower. The final solid product was collected via the bottom of the spraying tower. The result was a very white solid material with an average particle size of 25 µm and a residual solvent content of 3.78%.
Further examples are listed in below table, using the same procedure as described above with the indicated process parameters:
Surcol SP6 is an acrylic copolymer supplied as a 50% solution in ethanol. The copolymer is made up of 42.2 parts methyl methacrylate, 10.6 parts ethyl acrylate, 31.7 parts diacetone acrylamide and 15.5 parts dimethylaminoethyl acrylate methyl chloride quaternary salt. I am not aware of any patents involving this product.

| Nr | T_{CO2} | Tₚₑ | Pₚₑ | GTP | ND | Tₐₑ | P-SC[2h] DIN EN 827 |
|---|---|---|---|---|---|---|---|
| 2 | 190 °C | 184 °C | 170 bar | 8.0 | 0.78 mm | 36 °C | 2.82 % ± 0.61 |

### Application

The dried product (powder) can be used as a dispersing agent for inorganic and organic pigments in liquid and powder coating, graphic arts (printing inks) and plastics applications. The powder is also beneficial for solvent based applications because solvents, which are more preferred by the users, can be used as well. This broadens the application use of the polymeric dispersant.

They are no special requirement for the use of these types of products. The solid product can be pre-dissolved in the formulation prior to addition of pigments, or can be added together with the pigments to the formulation prior to the dispersing step.

In addition, the solid product can be dissolved or dispersed in a solvent or carrier of choice for specific applications.

## Claims

1. Use of a dried polymeric powder as a dispersing additive wherein the dried polymeric powder is obtained by a process comprising the steps of
(a) providing in a vessel a polyurethane dispersant dissolved in a solvent or an acrylic block copolymer dispersant dissolved in a solvent,
(b) adjusting the temperature of the dissolved dispersant of step a to a range between 40 °C to 200 °C,
(c) pressurizing carbon dioxide at a pressure between 50 and 1000 bar and heating the carbon dioxide to a temperature between 100 °C and 200 °C,
(d) mixing the heated dissolved dispersant of step b and the heated carbon dioxide to reach a gas to polymer ratio (GTP) of between 2 to 8,
(e) expanding the mixture obtained in d) by means of an expanding device into a spraying tower,
(f) removing from the stream of expanded carbon dioxide the dry polymeric particles which have been formed,
**characterized in that** the polyurethane dispersant is the reaction product of
A. one or more polyisocyanates having an average functionality of from 2.0 to 5, with
B. a mixture of
B1. at least one monohydroxyl compounds selected from the group consisting of monohydroxyl compounds with an aliphatic hydrocarbon, monohydroxyl compounds with an aliphatic hydrocarbon substituted with aryl groups, monohydroxyl compounds with an aliphatic hydrocarbon substituted with halogen groups, monohydroxyl compounds with a cycloaliphatic hydrocarbon, monohydroxyl compounds with a cycloaliphatic hydrocarbon substituted with aryl groups, and monohydroxyl compounds with a cycloaliphatic hydrocarbon substituted with halogen groups, and
B2. at least one monohydroxy-monocarboxylic acid compound, the monohydroxy-monocarboxylic acid compound obtained by esterification of hydrocarboxylic acids or by reaction of a diol with at least one dicarboxylic acid or anhydride compound, to form an intermediate, followed by reacting the intermediate with
C. a compound containing at least one basic ring nitrogen and a group which is capable of reacting with an isocyanate group; and
the acrylic block copolymer dispersant is prepared from an acrylate or methacrylate and at least one cationic monomer.

2. Use of the dried polymeric powder according to claim 1 as a dispersing additive in inks and coatings.

## Patentansprüche

1. Verwendung eines getrockneten Polymer-Pulvers als dispergierender Zusatz, wobei das getrocknete PolymerPulver durch ein Verfahren erhalten wird, umfassend die Schritte von
(a) Bereitstellen in einem Gefäß eines in einem Lösungsmittel gelösten Polyurethan-Dispergators, oder eines in einem Lösungsmittel gelösten Acryl-Block-Copolymer-Dispergators,
(b) Einstellen der Temperatur des gelösten Dispergators von Schritt a auf einen Bereich zwischen 40°C bis 200°C,
(c) Druckbeaufschlagung von Kohlenstoffdioxid auf einen Druck zwischen 50 und 1000 bar und Erhitzen des Kohlenstoffdioxids auf eine Temperatur zwischen 100°C und 200°C,
(d) Mischen des erhitzten gelösten Dispergators von Schritt b und des erhitzten Kohlenstoffdioxids, um ein Gas-zu-Polymer-Verhältnis (GTP) von zwischen 2 bis 8 zu erreichen,
(e) Entspannen des in d) erhaltenen Gemisches mit Hilfe einer Entspannungs-Vorrichtung in einen Sprühturm,
(f) Entfernen aus dem Strom des entspannten Kohlenstoffdioxids der trockenen Polymer-Teilchen, die sich gebildet haben,
**dadurch gekennzeichnet, dass** der Polyurethan-Dispergator das Reaktions-Produkt ist von
A. einem oder mehreren Polyisocyanaten mit einer mittleren Funktionalität von 2,0 bis 5, mit
B. einem Gemisch von
B1. mindestens einer Monohydroxyl-Verbindung(en), ausgewählt aus der Gruppe, bestehend aus Monohydroxyl-Verbindungen mit einem aliphatischen Kohlenwasserstoff, Monohydroxyl-Verbindungen mit einem aliphatischen Kohlenwasserstoff, substituiert mit Aryl-Gruppen, Monohydroxyl-Verbindungen mit einem aliphatischen Kohlenwasserstoff, substituiert mit Halogen-Gruppen, Monohydroxyl-Verbindungen mit einem cycloaliphatischen Kohlenwasserstoff, Monohydroxyl-Verbindungen mit einem cycloaliphatischen Kohlenwasserstoff, substituiert mit Aryl-Gruppen, und Monohydroxyl-Verbindungen mit einem cycloaliphatischen Kohlenwasserstoff, substituiert mit Halogen-Gruppen, und
B2. mindestens einer Monohydroxy-monocarbonsäure-Verbindung, wobei die Monohydroxy-monocarbonsäure-Verbindung durch Veresterung von Hydrocarbonsäuren oder durch Reaktion von einem Diol mit mindestens einer Dicarbonsäure oder Anhydrid-Verbindung erhalten wird, um ein Zwischenprodukt zu bilden, gefolgt von Umsetzen des Zwischenprodukts mit
C. einer Verbindung, die mindestens einen basischen Stickstoff-Ring und eine Gruppe enthält, die befähigt ist, mit einer Isocyanat-Gruppe zu reagieren; und
der Acryl-Block-Copolymer-Dispergator aus einem Acrylat oder Methacrylat und mindestens einem kationischen Monomer hergestellt wird.

2. Verwendung des getrockneten Polymer-Pulvers nach Anspruch 1 als ein dispergierender Zusatz in Druckfarben und Beschichtungen.

## Revendications

1. Utilisation d'une poudre sèche de polymère en tant qu'additif de dispersion, dans laquelle la poudre sèche de polymère est obtenue par un procédé comprenant les étapes :
(a) de disposition, dans un récipient, d'un dispersant polyuréthane dissous dans un solvant ou d'un dispersant copolymère séquencé acrylique dissous dans un solvant,
(b) d'ajustement de la température du dispersant dissous de l'étape (a) dans la plage comprise entre 40°C et 200°C,
(c) de pressurisation de dioxyde de carbone sous une pression comprise entre 50 et 1000 bar et de chauffage du dioxyde de carbone à une température comprise entre 100°C et 200°C,
(d) de mélange du dispersant dissous chauffé de l'étape (b) et du dioxyde de carbone chauffé pour atteindre un rapport du gaz sur le polymère (GTP) compris entre 2 et 8,
(e) de dilatation du mélange obtenu en (d) au moyen d'un dispositif d'expansion dans une tour de pulvérisation,
(f) de retrait du courant de dioxyde de carbone expansé les particules polymères sèches qui ont été formées, **caractérisée en ce que** le dispersant polyuréthane est le produit de la réaction de
A. un ou plusieurs polyisocyanate(s) présentant une fonctionnalité moyenne de 2,0 à 5, avec
B. un mélange de
B1. au moins un composé monohydroxylé choisi dans l'ensemble constitué par les composés monohydroxylés avec un hydrocarbure aliphatique, les composés monohydroxylés avec un hydrocarbure aliphatique substitué par des groupes aryle, les composés monohydroxylés avec un hydrocarbure aliphatique substitué par des groupes halogéno, les composés monohydroxylés avec un hydrocarbure cycloaliphatique, les composés monohydroxylés avec un hydrocarbure cycloaliphatique substitué par des groupes aryle, et les composés monohydroxylés avec un hydrocarbure cycloaliphatique substitué par des groupes halogéno, et
B2. au moins un composé d'acide monocarboxylique monohydroxylé, le composé d'acide monocarboxylique monohydroxylé étant obtenu par estérification d'acides hydrocarboxyliques ou par réaction d'un diol avec au moins un composé anhydride ou acide dicarboxylique, pour former un intermédiaire, suivie d'une réaction de l'intermédiaire avec
C. un composé contenant au moins un azote de cycle basique et un groupe capable de réagir avec un groupe isocyanate ; et
le dispersant copolymère séquencé acrylique est préparé à partir d'un acrylate ou méthacrylate et d'au moins un monomère cationique.

2. Utilisation de la poudre sèche de polymère selon la revendication 1 en tant qu'additif de dispersion dans des encres et des revêtements.
